# EUROPÄISCHE PATENTSCHRIFT

(11) **EP 2 825 789 B1**
(45) Veröffentlichungstag und Bekanntmachung des Hinweises auf die Patenterteilung: **01.11.2017**
(21) Anmeldenummer: 13702996.3
(22) Anmeldetag: 01.02.2013
(51) Int. Cl.: F16H 3/66

(54) **MEHRSTUFENGETRIEBE**
MULTISTAGE TRANSMISSION
BOÎTE DE VITESSES MULTI-ÉTAGÉE

(30) Priorität: 14.03.2012 DE 102012203936
(43) Veröffentlichungstag der Anmeldung: 21.01.2015
(73) Patentinhaber: ZF Friedrichshafen AG, 88046 Friedrichshafen (DE)
(72) Erfinder: BECK, Stefan, 88097 Eriskirch (DE); SIBLA, Christian, 88045 Friedrichshafen (DE); RIEGER, Wolfgang, 88048 Friedrichshafen (DE)
(86) Internationale Anmeldenummer: PCT/EP2013/051982
(87) Internationale Veröffentlichungsnummer: WO 2013/135426

(56) Entgegenhaltungen:
- DE-A1-102009 047 277
- DE-A1-102009 057 213
- JP-A- 2006 349 153
- US-A1- 2009 118 058
- US-A1- 2009 197 733

## Beschreibung

Die Erfindung betrifft ein Mehrstufengetriebe in Planetenbauweise, insbesondere für ein Kraftfahrzeug.

Derartige Mehrstufengetriebe kommen vorzugsweise als Automatikgetriebe von Kraftfahrzeugen zum Einsatz, wobei der in der jeweiligen Gangstufe wirksame Leistungsfluss innerhalb der Planetensätze durch eine gezielte Betätigung der Schaltelemente definiert wird. Dabei sind die Planetensätze bei einem Automatikgetriebe üblicherweise zudem mit einem einer Schlupfwirkung unterliegenden und wahlweise mit einer Überbrückungskupplung versehenen Anfahrelement verbunden, wie beispielsweise etwa einem hydrodynamischen Drehmomentwandler oder einer Strömungskupplung.

Aus der DE 10 2008 000 428 A1 ist ein Mehrstufengetriebe in Planetenbauweise bekannt, bei welchem in einem Gehäuse vier Planetensätze, sowie insgesamt acht drehbare Wellen angeordnet sind, von denen eine die Antriebswelle und eine andere die Abtriebswelle des Mehrstufengetriebes darstellt. Des Weiteren sind im Bereich der Wellen mindestens sechs Schaltelemente vorgesehen, mittels deren gezielter Betätigung der Leistungsfluss innerhalb der vier Planetensätze variiert und damit verschiedene Übersetzungsverhältnisse zwischen der Antriebs- und der Abtriebswelle definierbar sind. Insgesamt sind hierdurch neun Vorwärtsgänge, sowie ein
Rückwärtsgang schaltbar.

Aus der DE102009047277A1 ist ein Mehrstufengetriebe mit 9 Vorwärtsgängen bekannt, umfassend eine Antriebswelle, eine Abtriebswelle und vier Planetenradsätze, welche in einem Gehäuse angeordnet sind, insgesamt neun drehbare Wellen sowie mindestens sechs Schaltelemente, umfassend zwei Bremsen und Kupplungen, deren selektives Eingreifen verschiedene Übersetzungsverhältnisse zwischen der Antriebswelle und der Abtriebswelle bewirkt, so dass neun Vorwärtsgänge und ein Rückwärtsgang realisierbar sind, wobei das Sonnenrad des ersten Planetenradsatzes mit der mit dem Hohlrad des dritten Planetenradsatzes verbundenen fünften Welle wirkverbunden ist, die über eine erste Kupplung mit der achten Welle lösbar verbindbar ist, die mit dem Steg des zweiten Planetenradsatzes verbunden und über eine zweite Kupplung mit der neunten Welle lösbar verbindbar ist, wobei die neunte Welle mit dem Sonnenrad des dritten Planetenradsatzes und dem Sonnenrad des vierten Planetenradsatzes verbunden ist, wobei der Steg des ersten Planetenradsatzes mit der Antriebswelle verbunden ist, die über eine dritte Kupplung mit der mit dem Hohlrad des zweiten Planetenradsatzes verbundenen sechsten Welle lösbar verbindbar ist, wobei das Hohlrad des ersten Planetenradsatzes mit der mit dem Hohlrad des vierten Planetenradsatzes verbundenen Abtriebswelle wirkverbunden ist, wobei die dritte Welle mit dem Sonnenrad des zweiten Planetenradsatzes und dem Steg des dritten Planetenradsatzes verbunden und über eine erste Bremse an ein Gehäuse des Getriebes ankoppelbar ist und wobei die vierte Welle mit dem Steg des vierten Planetenradsatzes verbunden und über eine zweite Bremse an ein Gehäuse des Getriebes ankoppelbar ist.

Folgende Merkmale der Erfindung sind außerdem bereits aus der JP 2006 349153 A, die den nächstliegenden Stand der Technik offenbart, bekannt: Ein Mehrstufengetriebe umfassend zumindest vier Planetenradsätze, ein Gehäuse, eine Antriebswelle und eine Abtriebswelle. Ein Hohlrad des ersten Planetenradsatzes ist drehfest mit einem Sonnenrad des vierten Planetenradsatzes verbunden. Die Antriebswelle ist mit einem Sonnenrad des ersten Planetenradsatzes über eine erste Kupplung koppelbar. Ein Steg des ersten Planetenradsatzes ist über eine zweite Bremse mit dem Gehäuse koppelbar. Das Sonnenrad des ersten Planetenradsatzes ist über eine erste Bremse mit dem Gehäuse koppelbar. Dabei ist eine bestimmte Anzahl der folgenden Verbindungen ständig und eine andere bestimmte Anzahl der folgenden Verbindungen jeweils mittels zumindest eines Schaltelements lösbar ausgeführt: Verbindung eines Hohlrads des zweiten Planetenradsatzes mit dem Steg des ersten Planetenradsatzes; Verbindung des Hohlrads des ersten Planetenradsatzes mit einem Steg des zweiten Planetenradsatzes; Verbindung der Antriebswelle mit einem Sonnenrad des zweiten Planetenradsatzes.

Aufgabe der Erfindung ist es, ein alternatives Mehrstufengetriebe anzugeben, vorzugsweise mit verbesserten Wirkungsgrad und hinreichend großer und hinreichend gleichmäßig verteilter Übersetzungsreihe.

Die Aufgabe der Erfindung wird gelöst durch ein Mehrstufengetriebe gemäß Anspruch 1. Insbesondere durch ein Mehrstufengetriebe, umfassend zumindest vier Planetenradsätze, ein Gehäuse, eine Antriebswelle und eine Abtriebswelle wobei - ein Steg des vierten Planetenradsatzes drehfest mit dem Gehäuse verbunden ist,
- ein Hohlrad des ersten Planetenradsatzes drehfest mit einem Sonnenrad des vierten Planetenradsatzes verbunden ist,
- die Antriebswelle mit einem Sonnenrad des ersten Planetenradsatzes über eine erste Kupplung koppelbar ist,
- ein Hohlrad des vierten Planetenradsatzes mit der Abtriebswelle über eine zweite Kupplung koppelbar ist,
- ein Steg des ersten Planetenradsatzes über eine erste Bremse mit dem Gehäuse koppelbar ist,
- das Sonnenrad des ersten Planetenradsatzes über eine zweite Bremse mit dem Gehäuse koppelbar ist, und zumindest vier der folgenden Verbindungen ständig und zumindest zwei weitere der folgenden Verbindungen mittels zumindest eines Schaltelements lösbar ausgeführt sind:
- Verbindung eines Hohlrads des zweiten Planetenradsatzes mit dem Steg des ersten Planetenradsatzes,
- Verbindung des Hohlrads des ersten Planetenradsatzes mit einem Steg des zweiten Planetenradsatzes,
- Verbindung des Hohlrads des ersten Planetenradsatzes mit einem Sonnenrad eines dritten Planetenradsatzes,
- Verbindung eines Hohlrads des dritten Planetenradsatzes mit der Abtriebswelle,
- Verbindung der Antriebswelle mit einem Sonnenrad des zweiten Planetenradsatzes,
- Verbindung der Antriebswelle mit einem Steg des dritten Planetenradsatzes

Unter einem Planetenradsatz wird insbesondere ein Radsatz verstanden, welcher zumindest ein Sonnenrad umfasst, indem ein oder mehrere Planetenräder kämmen, einen Steg umfasst, welcher die Achsen der Planetenräder bestimmt und ein Hohlrad, in dem die Planetenräder kämmen. Bevorzugt weist das Hohlrad eine Innenverzahnung und das Sonnenrad eine Außenverzahnung auf.

Ein Vorteil der Erfindung kann es sein, dass die Schaltelemente des Mehrstufengetriebes, also die getriebeseitigen Bremsen und Kupplungen, von außen gut erreichbar sind. So können die Aktoren, wie beispielweise Elektromotoren, hydraulische Ventile, hydraulische Pumpen und Ähnliche in der Nähe der Schaltelemente angeordnet sein, wodurch mechanische und/oder hydraulische Verluste verringert werden und eine geringere Energie für die Betätigung des Schaltelementes notwendig sein kann. Auch kann weniger Energie notwendig sein, um das Schaltelement in seinem jeweils aktuellen Betriebszustand, also offen oder geschlossen, zu halten, zum Beispiel da durch kurze Leitungen auch die Druckverluste geringer sind. Auch ist es so möglich, Schaltelemente an dem Gehäuse und somit zumindest teilweise drehfest anzuordnen, wodurch Dichtungen, welche eine stehende Leitung mit einer drehenden Leitung verbinden, ganz oder teilweise vermieden werden können.

Auch vereinfacht die räumliche Anordnung der gut erreichbaren Schaltelemente das Ersetzen der üblichen hydraulisch betätigten Lamellenkupplungen oder - bremsen durch zum Beispiel elektro-mechanisch oder elektro-hydraulisch betätigte Bremsen und Kupplungen, die vergleichsweise einfach bedarfsgerecht ansteuerbar sind. Gut erreichbare Schaltelemente sind einerseits Bremsen, welche eine Welle mit dem Gehäuse drehfest koppeln, aber auch Schaltelemente an außen liegenden Wellen des Mehrstufengetriebes, vorzugsweise an An- oder Abtriebswelle, denen zur Betätigung benötigten Hydraulikfluid vergleichsweise einfach zugeführt werden kann.

Neben dieser Eigenschaft weist das Mehrstufengetriebe auch noch einen guten Verzahnungswirkungsgrad, lediglich kleine Belastungen der Bauteile, insbesondere niedrige Planetensatz- und Schaltelementmomente, niedrige Absolut- und Relativdrehzahlen und/oder einen geringen Bauaufwand auf. Letzteres ermöglicht die Realisierung des Mehrstufengetriebes mit nur geringem Gewicht und niedrigen Kosten. Schließlich ermöglicht das Mehrstufengetriebe auch eine gute Übersetzungsreihe, also eine gut brauchbare Abstufung der Gänge.

Allgemein umfasst eine bevorzugte Ausführungsform des Mehrstufengetriebes vier Planetenradsätze, vier Kupplungen, zwei Bremsen und eine feste Gehäusekopplung auf.

Durch Betätigung von jeweils zwei Schaltelementen (Bremsen und/ oder Kupplungen) lassen sich neun Vorwärtsgänge und ein Rückwärtsgang schalten, wobei für den vierten Gang weitere drei alternative Schaltstellungen zur Verfügung stehen.

Als Anfahrelemente können ein hydrodynamischer Drehmomentwandler, eine hydrodynamische Kupplung, eine zusätzliche Anfahrkupplung, eine integrierte Anfahrkupplung oder -bremse und/ oder eine zusätzliche E-Maschine dienen.

Auf jeder Welle kann prinzipiell eine E-Maschine oder eine sonstige Kraftleistungsquelle angeordnet werden. Desweitern kann auf jeder Welle prinzipiell ein Freilauf zum Gehäuse oder zu einer anderen Welle angeordnet werden.

Bevorzugt wird das Mehrstufengetriebe als Standardantrieb realisiert, denkbar ist aber auch eine Front-Quer Bauweise.

Alle Schaltelemente können reib- oder formschlüssig wirken. Vorzugsweise werden jedoch die Kupplung, welche die Antriebswelle mit dem Sonnenrad des ersten Planetenradsatzes verbindet und/ oder die Kupplung, welche das Hohlrad des vierten Planetenradsatzes mit der Abtriebswelle verbindet als formschlüssige Kupplungen, insbesondere als Klauenkupplungen ausgeführt, was zu einem deutlich verbesserten Wirkungsgrad und damit deutlichen Verbrauchsvorteilen führt.

Dabei wurde erkannt, dass die erste und die zweite Kupplung bei einem Durchschalten vom ersten in den neunten Gang nur einmal betätigt werden müssen und dass deshalb sich diese Schaltelemente insbesondere dafür eignen als Klauenkupplung ausgeführt zu werden. So wurde weiter erkannt, dass bei diesen Schaltelementen aufgrund ihrer vergleichsweise seltenen Betätigung der Vorteil des besseren Wirkungsgrads den Nachteil der schwierigeren Handhabung überwiegt. Insbesondere wurde erkannt, dass die Betätigung der beiden Schaltelemente bei vergleichsweise hohen Gängen stattfinden kann, wodurch der Drehzahlunterschied der Wellen gering sein kann und somit für die Betätigung einer Klauenkupplung günstig ist.

Die geometrische Lage (Reihenfolge) der einzelnen Radsätze und Schaltelemente ist frei wählbar, solange es die Bindbarkeit der Elemente zulässt. So können einzelne Elemente beliebig in ihrer Lage verschoben werden.

Weitere vorteilhafte Varianten des Mehrstufengetriebes ergeben sich aus den Unteransprüchen sowie aus der Beschreibung in Zusammenschau mit den Figuren. Diese weisen alle funktionell die gleichen Eigenschaften wie das Hauptsystem, insbesondere ähnlichen Wirkungsgrad, ähnliche Stufung etc. auf.

Zum besseren Verständnis der Erfindung wird diese anhand der nachfolgenden Figuren näher erläutert.

Es zeigen jeweils in stark schematisch vereinfachter Darstellung:
Fig. 1 eine erste schematisch dargestellte beispielhafte Variante eines erfindungsgemäßen Mehrstufengetriebes;
Fig. 2 eine zweite schematisch dargestellte beispielhafte Variante eines erfindungsgemäßen Mehrstufengetriebes;
Fig. 3 eine dritte schematisch dargestellte beispielhafte Variante eines erfindungsgemäßen Mehrstufengetriebes;
Fig. 4 eine vierte schematisch dargestellte beispielhafte Variante eines erfindungsgemäßen Mehrstufengetriebes;
Fig. 5 eine fünfte schematisch dargestellte beispielhafte Variante eines erfindungsgemäßen Mehrstufengetriebes;
Fig. 6 eine sechste schematisch dargestellte beispielhafte Variante eines erfindungsgemäßen Mehrstufengetriebes;
Fig. 7 eine siebente schematisch dargestellte beispielhafte Variante eines erfindungsgemäßen Mehrstufengetriebes;
Fig. 8 eine achte schematisch dargestellte beispielhafte Variante eines erfindungsgemäßen Mehrstufengetriebes und
Fig. 9 eine neunte schematisch dargestellte beispielhafte Variante eines erfindungsgemäßen Mehrstufengetriebes;
Fig. 10 eine Tabelle, welche die geschlossenen Schaltelemente in jeder Gangstufe anzeigt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

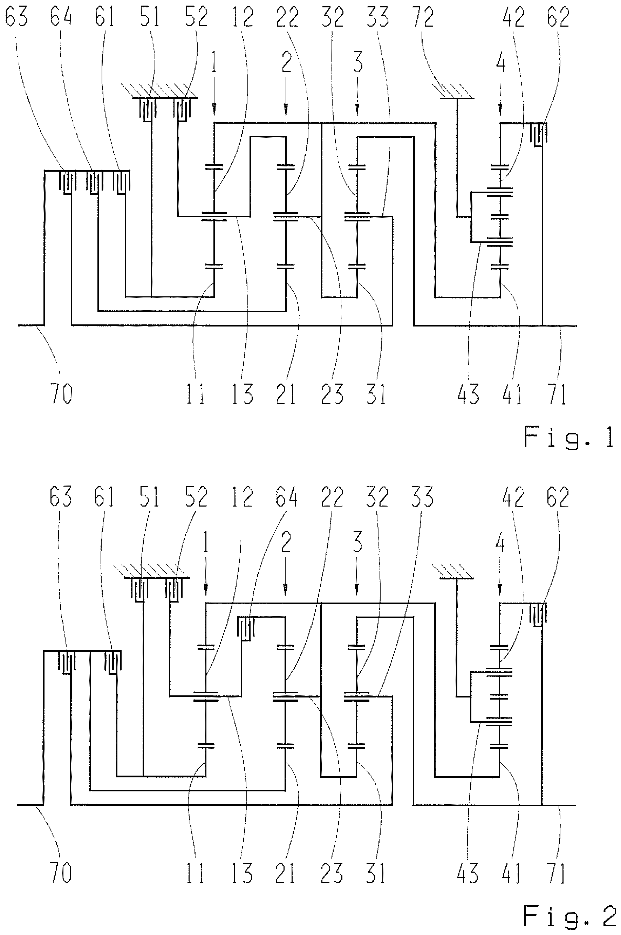

Die Fig. 1 zeigt ein Mehrstufengetriebe umfassend vier Planetenradsätze 1, 2, 3, 4, eine Antriebswelle 70, eine Abtriebswelle 71, sechs weitere drehbare Wellen 73, 74, 75, 76, 77, 78 sechs Schaltelemente 51, 52, 61, 62, 63, 64, davon zwei Bremsen 51, 52 und vier Kupplungen 61, 62, 63, 64. Die vier Planetenradsätze 1, 2, 3, 4 sind in der Reihenfolge erster Planetenradsatz 1, zweiter Planetenradsatz 2, dritter Planetenradsatz 3, vierter Planetenradsatz 4 hintereinander angeordnet. Der erste Planetenradsatz 1, der zweite Planetenradsatz 2, der dritte Planetenradsatz 3 sind als Minusplanetenradsatz ausgebildet, der vierte Planetenradsatz 4 ist als Plusplanetenradsatz ausgebildet. Die Planetenradsätze 1, 2, 3, 4, sind gemeinsam von einem Gehäuse 72 umgeben. Bei der Variante des Mehrstufengetriebes aus Figur 1 sind,
- ein Steg des vierten Planetenradsatzes 4 drehfest mit einem Gehäuse 72 verbunden,
- ein Hohlrad des ersten Planetenradsatzes 1 drehfest mit einem Sonnenrad 41 des vierten Planetenradsatzes 4 verbunden,
- die Antriebswelle 70 mit einem Sonnenrad 11 des ersten Planetenradsatzes 1 über die erste Kupplung 61 koppelbar,
- ein Hohlrad 42 des vierten Planetenradsatzes 4 mit der Abtriebswelle 71 über eine zweite Kupplung 62 koppelbar,
- ein Steg 13 des ersten Planetenradsatzes 1 über eine zweite Bremse 52 mit dem Gehäuse 72 koppelbar ist,
- das Sonnenrad 11 des ersten Planetenradsatzes 1 über eine erste Bremse 51 mit dem Gehäuse 72 koppelbar ist,
- das Hohlrad 22 des zweiten Planetenradsatzes 2 mit dem Steg 13 des ersten Planetenradsatzes 1 ständig verbunden ist,
- das Hohlrad 12 des ersten Planetenradsatzes 1 mit dem Steg 23 des zweiten Planetenradsatzes 2 ständig verbunden ist,
- das Hohlrad 12 des ersten Planetenradsatzes 1 mit dem Sonnenrad 31 des dritten Planetenradsatzes 3 ständig verbunden ist,
- das Hohlrad 32 des dritten Planetenrsatzes 3 mit der Abtriebswelle 71 ständig verbunden ist,
- die Antriebswelle 70 mit dem Sonnenrad 21 des zweiten Planetenradsatzes 2 über eine vierte Kupplung 64 koppelbar und
- die Antriebswelle 70 mit dem Steg 33 des dritten Planetenradsatzes 3 über eine dritte Kupplung 63 koppelbar ist.

Fig. 2 zeigt ein Mehrstufengetriebe, welches dem Mehrstufengetriebe aus Fig. 1 sehr ähnlich ist und sich in folgenden Punkten von der Ausführungsform aus Fig. 1 unterscheidet:
Das Hohlrad 22 des zweiten Radsatzes 2 ist mit dem Steg 13 des ersten Radsatzes 1 über eine vierte Kupplung 64 koppelbar und
   - der Antrieb 70 ist mit dem Sonnenrad 21 des zweiten Radsatzes 2 ständig verbunden.

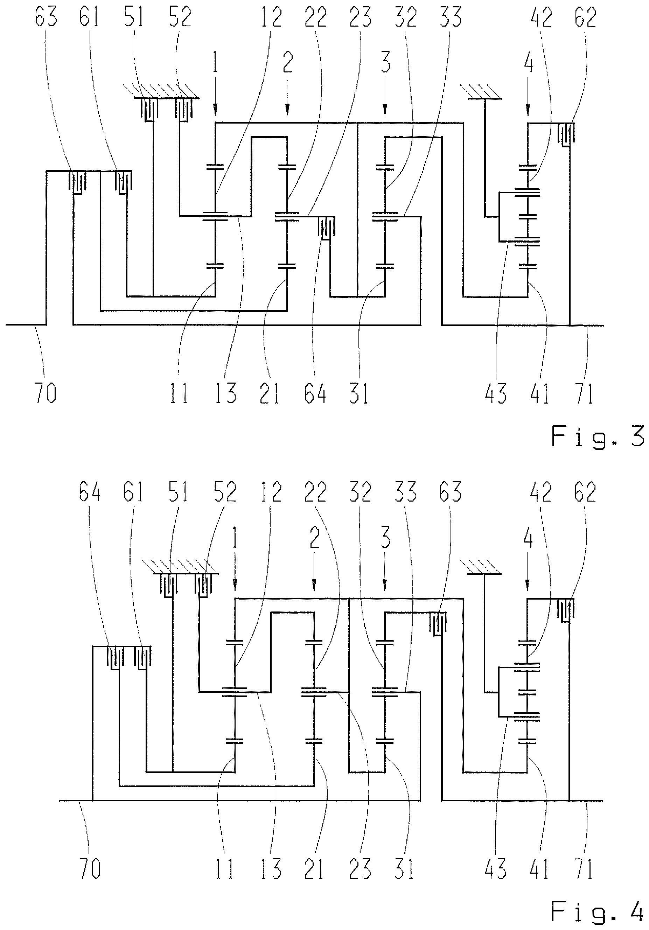

Fig. 3 zeigt ein weiteres Mehrstufengetriebe, welches dem Mehrstufengetriebe aus Fig. 1 sehr ähnlich ist und sich in folgenden Punkten von der Ausführungsform aus Fig. 1 unterscheidet:
Das Hohlrad 12 des ersten Radsatzes 1 ist mit dem Steg 23 des zweiten Radsatzes 2 über eine vierte Kupplung 64 koppelbar und
   - die Antriebswelle 70 ist mit dem Sonnenrad 21 des zweiten Radsatzes 2 ständig verbunden.

Die Fig. 4 zeigt eine weitere Variante eines Mehrstufengetriebes umfassend vier Planetenradsätze 1, 2, 3, 4, eine Antriebswelle 70, eine Abtriebswelle 71, sechs weitere drehbare Wellen 73, 74, 75, 76, 77, 78, sechs Schaltelemente 51, 52, 61, 62, 63, 64, davon zwei Bremsen 51, 52 und vier Kupplungen 61, 62, 63, 64. Die vier Planetenradsätze 1, 2, 3, 4 sind in der Reihenfolge erster Planetenradsatz 1, zweiter Planetenradsatz 2, dritter Planetenradsatz 3, vierter Planetenradsatz 4 hintereinander angeordnet. Der erste Planetenradsatz 1, der zweite Planetenradsatz 2 und der dritte Planetenradsatz 3 sind als Minusplanetenradsatz ausgebildet, der vierte Planetenradsatz 4 ist als Plusplanetenradsatz ausgebildet. Die Planetenradsätze 1, 2, 3, 4, sind gemeinsam von einem Gehäuse 72 umgeben. Bei der Variante des Mehrstufengetriebes aus Figur 4 sind ,
- der Steg des vierten Planetenradsatzes 4 drehfest mit dem Gehäuse 72 verbunden,
- das Hohlrad des ersten Planetenradsatzes 1 drehfest mit dem Sonnenrad 41 des vierten Radsatzes 4 verbunden ,
- die Antriebswelle 70 mit dem Sonnenrad 11 des ersten Radsatzes 1 über eine erste Kupplung 61 koppelbar,
- das Hohlrad 42 des vierten Radsatzes 4 mit der Abtriebswelle 71 über eine zweite Kupplung 62 koppelbar,
- der Steg 13 des ersten Radsatzes 1 über eine erste Bremse 51 einem Gehäuse 72 koppelbar,
- das Sonnenrad 11 des ersten Radsatzes 1 über eine zweite Bremse 52 mit dem Gehäuse 72 koppelbar,
- das Hohlrad des zweiten Radsatzes 2 mit dem Steg 13 des ersten Radsatzes 1 ständig verbunden,
- das Hohlrad 12 des ersten Radsatzes 1 mit einem Steg 23 des zweiten Radsatzes 2 ständig verbunden,
- das Hohlrad 12 des ersten Radsatzes 1 mit dem Sonnenrad des dritten Radsatzes 3 ständig verbunden,
- das Hohlrad 32 des dritten Radsatzes 3 mit der Abtriebswelle 71 über eine dritte Kupplung 63 koppelbar,
- die Antriebswelle 70 mit dem Sonnenrad 21 des zweiten Radsatzes 2 über eine vierte Kupplung 64 koppelbar und
- die Antriebswelle 70 mit dem Steg 33 des dritten Radsatzes 3 ständig verbunden.

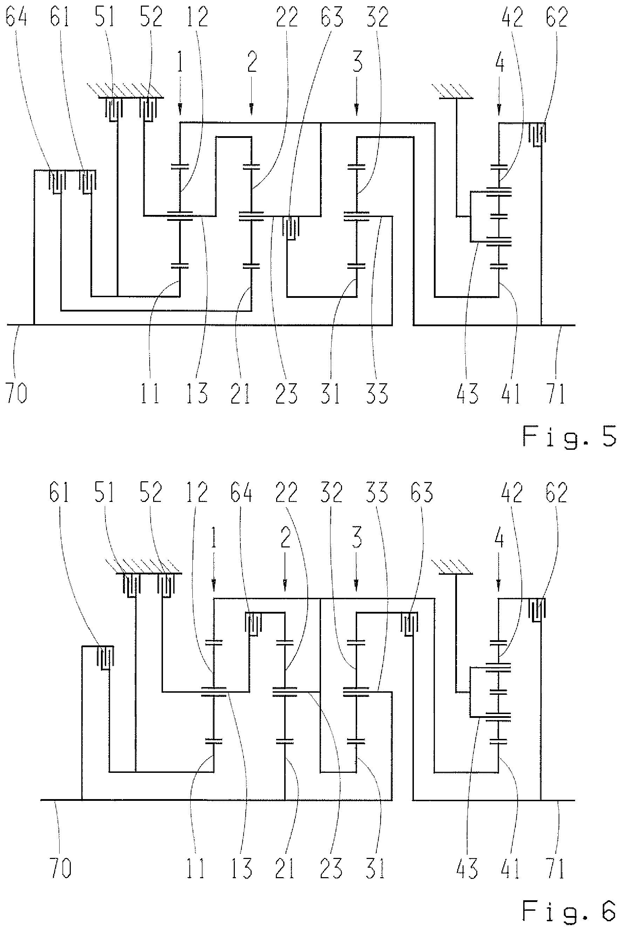

Fig. 5 zeigt ein Mehrstufengetriebe, welches sich in folgenden Merkmalen von dem Mehrstufengetriebe aus der Fig. 4 unterscheidet: Das Hohlrad 12 des ersten Radsatzes 1 ist mit dem Sonnenrad des dritten Radsatzes 3 über eine dritte Kupplung 63 koppelbar und das Hohlrad 32 des dritten Radsatzes 3 mit der Abtriebswelle 71 ständig verbunden.

Fig. 6 zeigt ein Mehrstufengetriebe, welches sich in folgenden Merkmalen von dem Mehrstufengetriebe aus der Fig. 4 unterscheidet: Das Hohlrad des zweiten Radsatzes 2 ist mit dem Steg 13 des ersten Radsatzes 1 über eine vierte Kupplung 64 koppelbar und die Antriebswelle 70 ist mit einem Sonnenrad 21 des zweiten Radsatzes 2 ständig verbunden.

Weiter ist das Sonnenrad des zweiten Radsatzes 2 ständig mit der Antriebswelle verbunden.

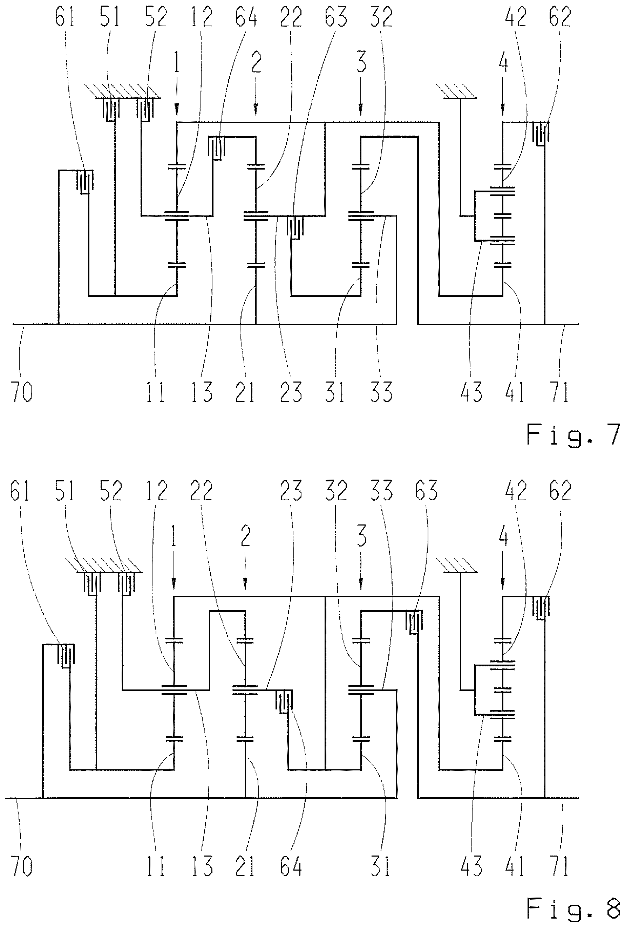

Fig. 8 zeigt ein Mehrstufengetriebe, welches dem Mehrstufengetriebe aus Fig. 6 sehr ähnlich ist und bei dem nur die Punkte h) und k) unterschiedlich ausgeführt sind. Konkret ist: Das Hohlrad 12 des ersten Radsatzes 1 ist mit einem Steg 23 des zweiten Radsatzes 2 über eine vierte Kupplung 64 koppelbar, und der Antrieb 70 ist mit einem Sonnenrad 21 des zweiten Radsatzes 2 ständig verbunden.

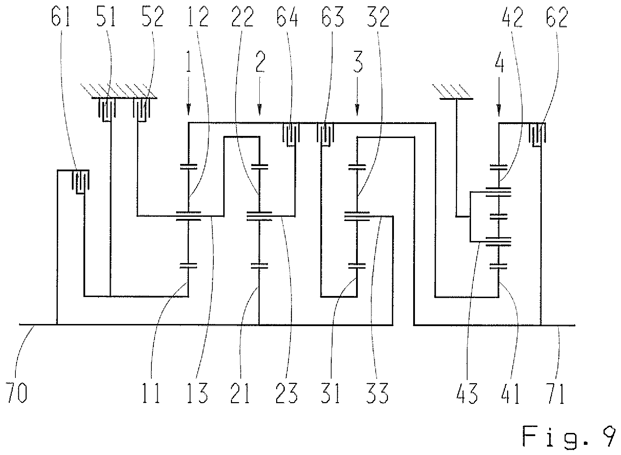

Fig. 9 zeigt schließlich ein Mehrstufengetriebe, welches sich von dem Mehrstufengetriebe aus Fig. 8 in folgenden Merkmalen unterscheidet:
Das Hohlrad 12 des ersten Radsatzes 1 ist mit einem Sonnenrad eines dritten Radsatzes 3 über eine dritte Kupplung 63 koppelbar und ein Hohlrad 32 des dritten Radsatzes 3 ist mit dem Abtrieb 71 ständig verbunden.

Bei allen in den Figuren 1 bis 9 dargestellten Mehrstufengetrieben können folgende Gänge schaltbar sein:
Ein erster Gang ist durch die geschlossene zweite Bremse 52, die geschlossene zweite Kupplung 62 und die geschlossene vierte Kupplung 64 realisierbar.
Ein zweiter Gang durch die geschlossene erste Bremse 51, die geschlossene zweite Kupplung 62 und die geschlossene vierte Kupplung 64 realisierbar.
Ein dritter Gang durch die geschlossene erste Kupplung 61, die geschlossene zweite Kupplung 62 und die geschlossene vierte Kupplung 64 realisierbar.
Ein vierter Gang durch die geschlossene zweite Kupplung 62, die geschlossene dritte Kupplung 63 und die geschlossene vierte Kupplung 64 oder
durch die geschlossene erste Bremse 51, die geschlossene zweite Kupplung 62 und die geschlossene dritte Kupplung 63 oder
durch die geschlossene zweite Bremse 52, die geschlossene zweite Kupplung 62 und die geschlossene dritte Kupplung 63 oder
durch die geschlossene erste Kupplung 61 ,die geschlossene zweite Kupplung 62 und die geschlossene dritte Kupplung 63 realisierbar.
Ein fünfter Gang ist durch die geschlossene erste Kupplung 61, die geschlossene dritte Kupplung 63 und die geschlossene vierte Kupplung 64 realisierbar.
Ein sechster Gang ist durch die geschlossene erste Bremse 51, die geschlossene dritte Kupplung 63 und die geschlossene vierte Kupplung 64 realisierbar.
Ein siebenter Gang ist durch die geschlossene zweite Bremse 52 , die geschlossene dritte Kupplung 63 und die geschlossene vierte Kupplung 64 realisierbar.
Ein achter Gang ist durch die geschlossene erste Bremse 51, die geschlossene zweite Bremse 52 und die geschlossene dritte Kupplung 63 realisierbar.
Ein neunter Gang ist durch die geschlossene zweite Bremse 52, die geschlossene erste Kupplung 61 und die geschlossene dritte Kupplung 63 realisierbar.
Ein Rückwärtsgang ist durch die geschlossene zweite Bremse 52, die geschlossene erste Kupplung 61 und die geschlossene zweite Kupplung 62 realisierbar.
Dabei sind die jeweils nicht genannten Schaltelemente geöffnet.
Dies zeigt auch die Tabelle in Figur 10, welche auch die Übersetzungsverhältnisse der jeweiligen Gangstufen darstellt.

Vorzugsweise sind bei den gezeigten Mehrstufengetrieben
- der erste Radsatz 1 als Minusradsatz,
- der zweite Radsatz 2 als Minusradsatz,
- der dritte Radsatz 3 als Minusradsatz und,
- der vierte Radsatz 4 als Plusradsatz ausgeführt.

In einer vorteilhaften Variante ist das Übersetzungsverhältnis:
- des ersten Radsatzes 1 zwischen Sonnenrad 11 und Hohlrad 12 gleich - 2,015
   und
- des zweiten Radsatzes 2 zwischen Sonnenrad 21 und Hohlrad 22 gleich - 1,600 und
- des dritten Radsatzes 3 zwischen Sonnenrad 31 und Hohlrad 32 gleich - 1,700 und
- des vierten Radsatzes 4 zwischen Sonnenrad 41 und Hohlrad 42
   gleich
   +1,804.

Die Ausführungsbeispiele zeigen mögliche Ausführungsvarianten eines erfindungsgemäßen Mehrstufengetriebes, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Insbesondere sind auch die sich aus der Kombinatorik und dem Patentanspruch 1 ergebenden, jedoch nicht explizit in den Figuren dargestellten Möglichkeiten vom Schutzumfang mitumfasst. Darüber hinaus sind auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren
Verständnis des Aufbaus des Mehrstufengetriebes dieses in den Figuren schematisch dargestellt ist und in der Realität daher mehr Bauteile als dargestellt, weniger Bauteile als dargestellt oder auch andere Bauteile umfassen kann. Generell liegt die konkrete konstruktive Ausgestaltung im Rahmen des fachmännischen Könnens.

Die den eigenständigen erfinderischen Lösungen zugrundeliegende Aufgabe kann der Beschreibung entnommen werden.

### Bezugszeichen

- 1: erster Getriebe-Radsatz
- 2: zweiter Getriebe-Radsatz
- 3: dritter Getriebe-Radsatz
- 4: vierter Getriebe-Radsatz
- 11: Sonnenrad des ersten Getriebe-Radsatzes
- 12: Hohlrad des ersten Getriebe-Radsatzes
- 13: Steg des ersten Getriebe-Radsatzes
- 21: Sonnenrad des zweiten Getriebe-Radsatzes
- 22: Hohlrad des zweiten Getriebe-Radsatzes
- 23: Steg des zweiten Getriebe-Radsatzes
- 31: Sonnenrad des dritten Getriebe-Radsatzes
- 32: Hohlrad des dritten Getriebe-Radsatzes
- 33: Steg des dritten Getriebe-Radsatzes
- 41: Sonnenrad des vierten Getriebe-Radsatzes
- 42: Hohlrad des vierten Getriebe-Radsatzes
- 43: Steg des vierten Getriebe-Radsatzes
- 51: erste Bremse
- 52: zweite Bremse
- 61: erste Kupplung
- 62: zweite Kupplung
- 63: dritte Kupplung
- 64: vierte Kupplung
- 70: Antrieb
- 71: Abtrieb
- 72: Gehäuse

## Patentansprüche

1. Mehrstufengetriebe,
umfassend zumindest vier Planetenradsätze (1,2,3,4), ein Gehäuse (72), eine Antriebswelle (70) und eine Abtriebswelle (71) wobei
- ein Hohlrad des ersten Planetenradsatzes (1) drehfest mit einem Sonnenrad (41) des vierten Planetenradsatzes (4) verbunden ist,
- die Antriebswelle (70) mit einem Sonnenrad (11) des ersten Planetenradsatzes (1) über eine erste Kupplung (61) koppelbar ist,
- ein Steg (13) des ersten Planetenradsatzes (1) über eine zweite Bremse (52) mit dem Gehäuse (72) koppelbar ist,
- das Sonnenrad (11) des ersten Planetenradsatzes (1) über eine erste Bremse (51) mit dem Gehäuse (72) koppelbar ist, wobei
- ein Steg des vierten Planetenradsatzes (4) drehfest mit dem Gehäuse (72) verbunden ist, wobei
- ein Hohlrad (42) des vierten Planetenradsatzes (4) mit der Abtriebswelle (71) über eine zweite Kupplung (62) koppelbar ist, und wobei vier der folgenden Verbindungen ständig und zwei der folgenden Verbindungen jeweils mittels zumindest eines Schaltelements lösbar ausgeführt sind:
- Verbindung eines Hohlrads (22) des zweiten Planetenradsatzes (2) mit dem Steg (13) des ersten Planetenradsatzes (1),
- Verbindung des Hohlrads (12) des ersten Planetenradsatzes (1) mit einem Steg (23) des zweiten Planetenradsatzes (2),
- Verbindung des Hohlrads (12) des ersten Planetenradsatzes (1) mit einem Sonnenrad (31) eines dritten Planetenradsatzes (3),
- Verbindung eines Hohlrads (32) des dritten Planetenradsatzes (3) mit der Abtriebswelle (71),
- Verbindung der Antriebswelle (70) mit einem Sonnenrad (21) des zweiten Planetenradsatzes (2),
- Verbindung der Antriebswelle (70) mit einem Steg (33) des dritten Planetenradsatzes (3).

2. Mehrstufengetriebe nach Anspruch 1, **dadurch gekennzeichnet, dass**,
- das Hohlrad (12) des ersten Planetenradsatzes (1) mit dem Sonnenrad (31) des dritten Planetenradsatzes (3) ständig verbunden ist,
- das Hohlrad (32) des dritten Planetenradsatzes (3) mit dem Abtrieb (71) ständig verbunden ist,
- die Antriebswelle (70) mit dem Steg (33) des dritten Planetenradsatzes (3) über eine dritte Kupplung (63) koppelbar ist.

3. Mehrstufengetriebe nach Anspruch 1, **dadurch gekennzeichnet, dass** eine der Verbindungen mit einer vierten Kupplung ausgeführt ist.

4. Mehrstufengetriebe nach Anspruch 1, **dadurch gekennzeichnet, dass**,
- der Antrieb (70) mit einem Steg (33) des dritten Planetenradsatzes (3) ständig verbunden ist.

5. Mehrstufengetriebe nach Anspruch 4, **dadurch gekennzeichnet, dass**,
- ein Hohlrad (22) eines zweiten Planetenradsatzes (2) mit dem Steg (13) des ersten Planetenradsatzes (1) ständig verbunden ist,
- das Hohlrad (12) des ersten Planetenradsatzes (1) mit einem Steg (23) des zweiten Planetenradsatzes (2) ständig verbunden ist,
- das Hohlrad (12) des ersten Planetenradsatzes (1) mit einem Sonnenrad eines dritten Planetenradsatzes (3) ständig verbunden ist,
- ein Hohlrad (32) des dritten Planetenradsatzes (3) mit der Abtriebswelle (71) über eine dritte Kupplung (63) koppelbar ist,
- die Antriebswelle (70) mit einem Sonnenrad (21) des zweiten Planetenradsatzes (2) über eine vierte Kupplung (64) koppelbar ist.

6. Mehrstufengetriebe nach Anspruch 4, **dadurch gekennzeichnet, dass**,
- ein Hohlrad (22) eines zweiten Planetenradsatzes (2) mit dem Steg (13) des ersten Planetenradsatzes (1) ständig verbunden ist,
- das Hohlrad (12) des ersten Planetenradsatzes (1) mit einem Steg (23) des zweiten Planetenradsatzes (2) ständig verbunden ist,
- das Hohlrad (12) des ersten Planetenradsatzes (1) mit einem Sonnenrad eines dritten Planetenradsatzes (3) über eine dritte Kupplung (63) koppelbar ist,
- ein Hohlrad (32) des dritten Planetenradsatzes (3) mit dem Abtrieb (71) ständig verbunden ist,
- der Antrieb (70) mit einem Sonnenrad (21) des zweiten Planetenradsatzes (2) über eine vierte Kupplung (64) koppelbar ist.

7. Mehrstufengetriebe nach Anspruch 4, **dadurch gekennzeichnet, dass**,
- ein Hohlrad (22) eines zweiten Planetenradsatzes (2) mit dem Steg (13) des ersten Planetenradsatzes (1) über eine vierte Kupplung (64) koppelbar ist,
- das Hohlrad (12) des ersten Planetenradsatzes (1) mit einem Steg (23) des zweiten Planetenradsatzes (2) ständig verbunden ist,
- das Hohlrad (12) des ersten Planetenradsatzes (1) mit einem Sonnenrad eines dritten Planetenradsatzes (3) ständig verbunden ist,
- ein Hohlrad (32) des dritten Planetenradsatzes (3) mit dem Abtrieb (71) über eine dritte Kupplung (63) koppelbar ist,
- der Antrieb (70) mit einem Sonnenrad (21) des zweiten Planetenradsatzes (2) ständig verbunden ist.

8. Mehrstufengetriebe nach Anspruch 4, **dadurch gekennzeichnet, dass**,
- ein Hohlrad (22) eines zweiten Planetenradsatzes (2) mit dem Steg (13) des ersten Planetenradsatzes (1) über eine vierte Kupplung (64) koppelbar ist,
- das Hohlrad (12) des ersten Planetenradsatzes (1) mit einem Steg (23) des zweiten Planetenradsatzes (2) ständig verbunden ist,
- das Hohlrad (12) des ersten Planetenradsatzes (1) mit einem Sonnenrad eines dritten Planetenradsatzes (3) über eine dritte Kupplung (63) koppelbar ist,
- ein Hohlrad (32) des dritten Planetenradsatzes (3) mit dem Abtrieb (71) ständig verbunden ist,
- der Antrieb (70) mit einem Sonnenrad (21) des zweiten Planetenradsatzes (2) ständig verbunden ist.

9. Mehrstufengetriebe nach Anspruch 4, **dadurch gekennzeichnet, dass**,
- ein Hohlrad (22) eines zweiten Planetenradsatzes (2) mit dem Steg (13) des ersten Planetenradsatzes (1) ständig verbunden ist,
- das Hohlrad (12) des ersten Planetenradsatzes (1) mit einem Steg (23) des zweiten Planetenradsatzes (2) über eine vierte Kupplung (64) koppelbar ist,
- das Hohlrad (12) des ersten Planetenradsatzes (1) mit einem Sonnenrad eines dritten Planetenradsatzes (3) ständig verbunden ist,
- ein Hohlrad (32) des dritten Planetenradsatzes (3) mit dem Abtrieb (71) über eine dritte Kupplung (63) koppelbar ist,
- der Antrieb (70) mit einem Sonnenrad (21) des zweiten Planetenradsatzes (2) ständig verbunden ist.

10. Mehrstufengetriebe nach Anspruch 4, **dadurch gekennzeichnet, dass**,
- ein Hohlrad (22) eines zweiten Planetenradsatzes (2) mit dem Steg (13) des ersten Planetenradsatzes (1) ständig verbunden ist,
- das Hohlrad (12) des ersten Planetenradsatzes (1) mit einem Steg (23) des zweiten Planetenradsatzes (2) über eine vierte Kupplung (64) koppelbar ist,
- das Hohlrad (12) des ersten Planetenradsatzes (1) mit einem Sonnenrad eines dritten Planetenradsatzes (3) über eine dritte Kupplung (63) koppelbar ist,
- ein Hohlrad (32) des dritten Planetenradsatzes (3) mit dem Abtrieb (71) ständig verbunden ist,
- der Antrieb (70) mit einem Sonnenrad (21) des zweiten Planetenradsatzes (2) ständig verbunden ist.

11. Mehrstufengetriebe nach einem der Ansprüche 3 oder 5 bis 10,
**dadurch gekennzeichnet, dass** folgende Gänge durch Schließen der angegebenen Elemente schaltbar sind:,
- ein erster Gang durch zweite Bremse (52), zweite Kupplung (62) und vierte Kupplung (64),
- ein zweiter Gang durch erste Bremse (51), zweite Kupplung (62) und vierte Kupplung (64),
- ein dritter Gang durch erste Kupplung (61), zweite Kupplung (62) und vierte Kupplung (64),
- ein vierter Gang durch zweite Kupplung (62), dritte Kupplung (63) und vierte Kupplung (64) oder.
durch erste Bremse (51), zweite Kupplung (62) und dritte Kupplung (63) oder
durch zweite Bremse (52), zweite Kupplung (62) und dritte Kupplung (63) oder
durch erste Kupplung (61), zweite Kupplung (62) und dritte Kupplung (63)
- ein fünfter Gang durch erste Kupplung (61), dritte Kupplung (63) und vierte Kupplung (64),
- ein sechster Gang durch erste Bremse (51), dritte Kupplung (63) und vierte Kupplung (64),
- ein siebenter Gang durch zweite Bremse (52), dritte Kupplung (63) und vierte Kupplung (64),
- ein achter Gang durch erste Bremse (51), zweite Bremse (52) und dritte Kupplung (63),
- ein neunter Gang durch zweite Bremse (52), erste Kupplung (61) und dritte Kupplung (63),
- ein Rückwärtsgang durch zweite Bremse (52), erste Kupplung (61) und zweite Kupplung (62),
wobei die jeweils nicht genannten Elemente unbetätigt,beziehungsweise geöffnet sind.

12. Mehrstufengetriebe nach einem der Ansprüche 1 bis 11, **dadurch gekennzeichnet, dass**:
- der erste Planetenradsatz (1) als Minus-Planetenradsatz,
- der zweite Planetenradsatz (2) als Minus-Planetenradsatz,
- der dritte Planetenradsatz (3) als Minus-Planetenradsatz und,
- der vierte Planetenradsatz (4) als Plus-Planetenradsatz ausgeführt sind.

13. Mehrstufengetriebe nach Anspruch 12, **dadurch gekennzeichnet, dass** das Übersetzungsverhältnis:,
- des ersten Radsatzes (1) zwischen Sonnenrad (11) und Hohlrad (12) -2,015 und/ oder
- des zweiten Radsatzes (2) zwischen Sonnenrad (21) und Hohlrad (22) -1,600 und/ oder
- des dritten Radsatzes (3) zwischen Sonnenrad (31) und Hohlrad (32) -1,700 und/ oder
- des vierten Radsatzes (4) zwischen Sonnenrad (41) und Hohlrad (42) +1,804 beträgt.

14. Mehrstufengetriebe nach einem der Ansprüche 1 bis 13, **dadurch gekennzeichnet, dass** die erste Kupplung (61) und die zweite Kupplung (62) jeweils als Klauenkupplung ausgeführt sind.

## Claims

1. Multistage transmission,
comprising at least four planetary gear sets (1, 2, 3, 4), a housing (72), a driveshaft (70) and an output shaft (71), wherein
- a internal gear of the first planetary gear set (1) is connected rotationally conjointly to a sun gear (41) of the fourth planetary gear set (4),
- the drive shaft (70) is couplable to a sun gear (11) of the first planetary gear set (1) by means of a first clutch (61),
- a web (13) of the first planetary gear set (1) is couplable to the housing (72) by means of a second brake (52),
- the sun gear (11) of the first planetary gear set (1) is couplable to the housing (72) by means of a first brake (51), wherein
- a web of the fourth planetary gear set (4) is connected rotationally fixedly to the housing (72), wherein
- an internal gear (42) of the fourth planetary gear set (4) is couplable to the output shaft (71) by means of a second clutch (62), and wherein four of the following connections are designed to be permanent and two of the following connections are designed to be releasable in each case by means of at least one shift element:
- connection of an internal gear (22) of the second planetary gear set (2) to the web (13) of the first planetary gear set (1),
- connection of the internal gear (12) of the first planetary gear set (1) to a web (23) of the second planetary gear set (2),
- connection of the internal gear (12) of the first planetary gear set (1) to a sun gear (31) of a third planetary gear set (3),
- connection of an internal gear (32) of the third planetary gear set (3) to the output shaft (71),
- connection of the drive shaft (70) to a sun gear (21) of the second planetary gear set (2),
- connection of the drive shaft (70) to a web (33) of the third planetary gear set (3).

2. Multistage transmission according to Claim 1, **characterized in that**
- the internal gear (12) of the first planetary gear set (1) is permanently connected to the sun gear (31) of the third planetary gear set (3),
- the internal gear (32) of the third planetary gear set (3) is permanently connected to the output (71),
- the drive shaft (70) is couplable to the web (33) of the third planetary gear set (3) by means of a third clutch (63).

3. Multistage transmission according to Claim 1, **characterized in that** one of the connections is implemented with a fourth clutch.

4. Multistage transmission according to Claim 1, **characterized in that**
- the drive (70) is permanently connected to a web (33) of the third planetary gear set (3).

5. Multistage transmission according to Claim 4, **characterized in that**
- an internal gear (22) of a second planetary gear set (2) is permanently connected to the web (13) of the first planetary gear set (1),
- the internal gear (12) of the first planetary gear set (1) is permanently connected to a web (23) of the second planetary gear set (2),
- the internal gear (12) of the first planetary gear set (1) is permanently connected to a sun gear of a third planetary gear set (3),
- an internal gear (32) of the third planetary gear set (3) is couplable to the output shaft (71) by means of a third clutch (63),
- the drive shaft (70) is couplable to a sun gear (21) of the second planetary gear set (2) by means of a fourth clutch (64).

6. Multistage transmission according to Claim 4, **characterized in that**
- an internal gear (22) of a second planetary gear set (2) is permanently connected to the web (13) of the first planetary gear set (1),
- the internal gear (12) of the first planetary gear set (1) is permanently connected to a web (23) of the second planetary gear set (2),
- the internal gear (12) of the first planetary gear set (1) is couplable to a sun gear of a third planetary gear set (3) by means of a third clutch (63),
- an internal gear (32) of the third planetary gear set (3) is permanently connected to the output (71),
- the drive (70) is couplable to a sun gear (21) of the second planetary gear set (2) by means of a fourth clutch (64).

7. Multistage transmission according to Claim 4, **characterized in that**
- an internal gear (22) of a second planetary gear set (2) is couplable to the web (13) of the first planetary gear set (1) by means of a fourth clutch (64),
- the internal gear (12) of the first planetary gear set (1) is permanently connected to a web (23) of the second planetary gear set (2),
- the internal gear (12) of the first planetary gear set (1) is permanently connected to a sun gear of a third planetary gear set (3),
- an internal gear (32) of the third planetary gear set (3) is couplable to the output (71) by means of a third clutch (63),
- the drive (70) is permanently connected to a sun gear (21) of the second planetary gear set (2).

8. Multistage transmission according to Claim 4, **characterized in that**
- an internal gear (22) of a second planetary gear set (2) is couplable to the web (13) of the first planetary gear set (1) by means of a fourth clutch (64),
- the internal gear (12) of the first planetary gear set (1) is permanently connected to a web (23) of the second planetary gear set (2),
- the internal gear (12) of the first planetary gear set (1) is couplable to a sun gear of a third planetary gear set (3) by means of a third clutch (63),
- an internal gear (32) of the third planetary gear set (3) is permanently connected to the output (71),
- the drive (70) is permanently connected to a sun gear (21) of the second planetary gear set (2).

9. Multistage transmission according to Claim 4, **characterized in that**
- an internal gear (22) of a second planetary gear set (2) is permanently connected to the web (13) of the first planetary gear set (1),
- the internal gear (12) of the first planetary gear set (1) is couplable to a web (23) of the second planetary gear set (2) by means of a fourth clutch (64),
- the internal gear (12) of the first planetary gear set (1) is permanently connected to a sun gear of a third planetary gear set (3),
- an internal gear (32) of the third planetary gear set (3) is couplable to the output (71) by means of a third clutch (63),
- the drive (70) is permanently connected to a sun gear (21) of the second planetary gear set (2).

10. Multistage transmission according to Claim 4, **characterized in that**
- an internal gear (22) of a second planetary gear set (2) is permanently connected to the web (13) of the first planetary gear set (1),
- the internal gear (12) of the first planetary gear set (1) is couplable to a web (23) of the second planetary gear set (2) by means of a fourth clutch (64),
- the internal gear (12) of the first planetary gear set (1) is couplable to a sun gear of a third planetary gear set (3) by means of a third clutch (63),
- an internal gear (32) of the third planetary gear set (3) is permanently connected to the output (71),
- the drive (70) is permanently connected to a sun gear (21) of the second planetary gear set (2).

11. Multistage transmission according to one of Claims 3 or 5 to 10, **characterized in that** the following gear ratios can be engaged by closing the stated elements:
- a first gear ratio by means of second brake (52), second clutch (62) and fourth clutch (64),
- a second gear ratio by means of first brake (51), second clutch (62) and fourth clutch (64),
- a third gear ratio by means of first clutch (61), second clutch (62) and fourth clutch (64),
- a fourth gear ratio by means of second clutch (62), third clutch (63) and fourth clutch (64) or
by means of first brake (51), second clutch (62) and third clutch (63) or
by means of second brake (52), second clutch (62) and third clutch (63), or
by means of first clutch (61), second clutch (62) and third clutch (63),
- a fifth gear ratio by means of first clutch (61), third clutch (63) and fourth clutch (64),
- a sixth gear ratio by means of first brake (51), third clutch (63) and fourth clutch (64),
- a seventh gear ratio by means of second brake (52), third clutch (63) and fourth clutch (64),
- an eighth gear ratio by means of first brake (51), second brake (52) and third clutch (63),
- a ninth gear ratio by means of second brake (52), first clutch (61) and third clutch (63),
- a reverse gear ratio by means of second brake (52), first clutch (61) and second clutch (62),
wherein the elements not stated in each case are unactuated or open.

12. Multistage transmission according to one of Claims 1 to 11, **characterized in that**:
- the first planetary gear set (1) is designed as a minus planetary gear set,
- the second planetary gear set (2) is designed as a minus planetary gear set,
- the third planetary gear set (3) is designed as a minus planetary gear set, and
- the fourth planetary gear set (4) is designed as a plus planetary gear set.

13. Multistage transmission according to Claim 12, **characterized in that** the transmission ratio:
- of the first gear set (1) between sun gear (11) and internal gear (12) is -2.015, and/or
- of the second gear set (2) between sun gear (21) and internal gear (22) is -1.600, and/or
- of the third gear set (3) between sun gear (31) and internal gear (32) is -1.700, and/or
- of the fourth gear set (4) between sun gear (41) and internal gear (42) is +1.804.

14. Multistage transmission according to one of Claims 1 to 13, **characterized in that** the first clutch (61) and the second clutch (62) are each in the form of dog clutches.

## Revendications

1. Boîte de vitesses multi-étagée, comprenant au moins quatre trains planétaires (1, 2, 3, 4), un boîtier (72), un arbre d'entraînement (70) et un arbre de prise de force (71),
- une couronne dentée du premier train planétaire (1) étant connectée de manière solidaire en rotation à une roue solaire (41) du quatrième train planétaire (4),
- l'arbre d'entraînement (70) pouvant être accouplé à une roue solaire (11) du premier train planétaire (1) par le biais d'un premier embrayage (61),
- un porte-satellites (13) du premier train planétaire (1) pouvant être accouplé au boîtier (72) par le biais d'un deuxième frein (52),
- la roue solaire (11) du premier train planétaire (1) pouvant être accouplée au boîtier (72) par le biais d'un premier frein (51),
- un porte-satellites du quatrième train planétaire (4) étant connecté de manière solidaire en rotation au boîtier (72),
- une couronne dentée (42) du quatrième train planétaire (4) pouvant être accouplée à l'arbre de prise de force (71) par le biais d'un deuxième embrayage (62) et quatre des connexions suivantes étant réalisées sous forme permanente et deux des connexions suivantes étant réalisées de manière desserrable à chaque fois au moyen d'au moins un élément de commutation :
- connexion d'une couronne dentée (22) du deuxième train planétaire (2) au porte-satellites (13) du premier train planétaire (1),
- connexion de la couronne dentée (12) du premier train planétaire (1) à un porte-satellites (23) du deuxième train planétaire (2),
- connexion de la couronne dentée (2) du premier train planétaire (1) à une roue solaire (31) d'un troisième train planétaire (3),
- connexion d'une couronne dentée (32) du troisième train planétaire (3) à l'arbre de prise de force (71),
- connexion de l'arbre d'entraînement (70) à une roue solaire (21) du deuxième train planétaire (2),
- connexion de l'arbre d'entraînement (70) à un porte-satellites (33) du troisième train planétaire (3).

2. Boîte de vitesses multi-étagée selon la revendication 1, **caractérisée en ce que**
- la couronne dentée (12) du premier train planétaire (1) est connectée de manière permanente à la roue solaire (31) du troisième train planétaire (3),
- la couronne dentée (32) du troisième train planétaire (3) est connectée de manière permanente à la prise de force (71),
- l'arbre d'entraînement (70) peut être accouplé au porte-satellites (33) du troisième train planétaire (3) par le biais d'un troisième embrayage (63).

3. Boîte de vitesses multi-étagée selon la revendication 1, **caractérisée en ce que** l'une des connexions est réalisée avec un quatrième embrayage.

4. Boîte de vitesses multi-étagée selon la revendication 1, **caractérisée en ce que**
- l'entraînement (70) est connecté de manière permanente à un porte-satellites (33) du troisième train planétaire (3).

5. Boîte de vitesses multi-étagée selon la revendication 4, **caractérisée en ce que**
- une couronne dentée (22) d'un deuxième train planétaire (2) est connectée de manière permanente au porte-satellites (13) du premier train planétaire (1),
- la couronne dentée (12) du premier train planétaire (1) est connectée de manière permanente à un porte-satellites (23) du deuxième train planétaire (2),
- la couronne dentée (12) du premier train planétaire (1) est connectée de manière permanente à une roue solaire d'un troisième train planétaire (3),
- une couronne dentée (32) du troisième train planétaire (3) peut être accouplée à l'arbre de prise de force (71) par le biais d'un troisième embrayage (63),
- l'arbre d'entraînement (70) peut être accouplé à une roue solaire (21) du deuxième train planétaire (2) par le biais d'un quatrième embrayage (64).

6. Boîte de vitesses multi-étagée selon la revendication 4, **caractérisée en ce que**
- une couronne dentée (22) d'un deuxième train planétaire (2) est connectée de manière permanente au porte-satellites (13) du premier train planétaire (1),
- la couronne dentée (12) du premier train planétaire (1) est connectée de manière permanente à un porte-satellites (23) du deuxième train planétaire (2),
- la couronne dentée (12) du premier train planétaire (1) peut être accouplée à une roue solaire d'un troisième train planétaire (3) par le biais d'un troisième embrayage (63),
- une couronne dentée (32) du troisième train planétaire (3) est connectée de manière permanente à la prise de force (71),
- l'entraînement (70) peut être accouplé à une roue solaire (21) du deuxième train planétaire (2) par le biais d'un quatrième embrayage (64).

7. Boîte de vitesses multi-étagée selon la revendication 4, **caractérisée en ce que**
- une couronne dentée (22) d'un deuxième train planétaire (2) peut être accouplée au porte-satellites (13) du premier train planétaire (1) par le biais d'un quatrième embrayage (64),
- la couronne dentée (12) du premier train planétaire (1) est connectée de manière permanente à un porte-satellites (23) du deuxième train planétaire (2),
- la couronne dentée (12) du premier train planétaire (1) est connectée de manière permanente à une roue solaire d'un troisième train planétaire (3),
- une couronne dentée (32) du troisième train planétaire (3) peut être accouplée à la prise de force (71) par le biais d'un troisième embrayage (63),
- l'entraînement (70) est connecté de manière permanente à une roue solaire (21) du deuxième train planétaire (2).

8. Boîte de vitesses multi-étagée selon la revendication 4, **caractérisée en ce que**
- une couronne dentée (22) d'un deuxième train planétaire (2) peut être accouplée au porte-satellites (13) du premier train planétaire (1) par le biais d'un quatrième embrayage (64),
- la couronne dentée (12) du premier train planétaire (1) est connectée de manière permanente à un porte-satellites (23) du deuxième train planétaire (2),
- la couronne dentée (12) du premier train planétaire (1) peut être accouplée à une roue solaire d'un troisième train planétaire (3) par le biais d'un troisième embrayage (63),
- une couronne dentée (32) du troisième train planétaire (3) est connectée de manière permanente à la prise de force (71),
- l'entraînement (70) est connecté de manière permanente à une roue solaire (21) du deuxième train planétaire (2).

9. Boîte de vitesses multi-étagée selon la revendication 4, **caractérisée en ce que**
- une couronne dentée (22) d'un deuxième train planétaire (2) est connectée de manière permanente au porte-satellites (13) du premier train planétaire (1),
- la couronne dentée (12) du premier train planétaire (1) peut être accouplée à un porte-satellites (23) du deuxième train planétaire (2) par le biais d'un quatrième embrayage (64),
- la couronne dentée (12) du premier train planétaire (1) est connectée de manière permanente à une roue solaire d'un troisième train planétaire (3),
- une couronne dentée (32) du troisième train planétaire (3) peut être accouplée à la prise de force (71) par le biais d'un troisième embrayage (63),
- l'entraînement (70) est connecté de manière permanente à une roue solaire (21) du deuxième train planétaire (2).

10. Boîte de vitesses multi-étagée selon la revendication 4, **caractérisée en ce que**
- une couronne dentée (22) d'un deuxième train planétaire (2) est connectée de manière permanente au porte-satellites (13) du premier train planétaire (1),
- la couronne dentée (12) du premier train planétaire (1) peut être accouplée à un porte-satellites (23) du deuxième train planétaire (2) par le biais d'un quatrième embrayage (64),
- la couronne dentée (12) du premier train planétaire (1) peut être accouplée à roue solaire d'un troisième train planétaire (3) par le biais d'un troisième embrayage (63),
- une couronne dentée (32) du troisième train planétaire (3) est connectée de permanente à la prise de force (71),
- l'entraînement (70) est connecté de manière permanente à une roue solaire (21) du deuxième train planétaire (2).

11. Boîte de vitesses multi-étagée selon l'une quelconque des revendications 3 ou 5 à 10, **caractérisée en ce que** les rapports de vitesses suivants peuvent être commutés par fermeture des éléments indiquées :
- un premier rapport de vitesse par le deuxième frein (52), le deuxième embrayage (62) et le quatrième embrayage (64),
- un deuxième rapport de vitesse par le premier frein (51), le deuxième embrayage (62) et le quatrième embrayage (64),
- un troisième rapport de vitesse par le premier embrayage (61), le deuxième embrayage (62) et le quatrième embrayage (64),
- un quatrième rapport de vitesse par le deuxième embrayage (62), le troisième embrayage (63) et le quatrième embrayage (64) ou
par le premier frein (51), le deuxième embrayage (62) et le troisième embrayage (63) ou
par le deuxième frein (52), le deuxième embrayage (62) et le troisième embrayage (63) ou
par le premier embrayage (61), le deuxième embrayage (62) et le troisième embrayage (63),
- un cinquième rapport de vitesse par le premier embrayage (61), le troisième embrayage (63) et le quatrième embrayage (64),
- un sixième rapport de vitesse par le premier frein (51), le troisième embrayage (63) et le quatrième embrayage (64),
- un septième rapport de vitesse par le deuxième frein (52), le troisième embrayage (63) et le quatrième embrayage (64),
- un huitième rapport de vitesse par le premier frein (51), le deuxième frein (52) et le troisième embrayage (63),
- un neuvième rapport de vitesse par le deuxième frein (52), le premier embrayage (61) et le troisième embrayage (63),
- un rapport de marche arrière par le deuxième frein (52), le premier embrayage (61) et le deuxième embrayage (62),
les éléments respectivement non mentionnés étant non actionnés ou étant ouverts.

12. Boîte de vitesses multi-étagée selon l'une quelconque des revendications 1 à 11, **caractérisée en ce que** :
- le premier train planétaire (1) est réalisé sous forme de train planétaire négatif,
- le deuxième train planétaire (2) est réalisé sous forme de train planétaire négatif,
- le troisième train planétaire (3) est réalisé sous forme de train planétaire négatif, et
- le quatrième train planétaire (4) est réalisé sous forme de train planétaire positif.

13. Boîte de vitesses multi-étagée selon la revendication 12, **caractérisée en ce que** le rapport de démultiplication :
- du premier jeu d'engrenages (1) entre la roue solaire (11) et la couronne dentée (12) est de - 2,015 et/ou
- du deuxième jeu d'engrenages (2) entre la roue solaire (21) et la couronne dentée (22) est de - 1,600 et/ou
- du troisième jeu d'engrenages (3) entre la roue solaire (31) et la couronne dentée (32) est de - 1,700 et/ou
- du quatrième jeu d'engrenages (4) entre la roue solaire (41) et la couronne dentée (42) est de + 1,804.

14. Boîte de vitesses multi-étagée selon l'une quelconque des revendications 1 à 13, **caractérisée en ce que** le premier embrayage (61) et le deuxième embrayage (62) sont à chaque fois réalisés sous forme d'embrayage à griffes.
